# EUROPEAN PATENT SPECIFICATION

(11) **EP 3 352 322 B1**
(45) Date of publication and mention of the grant of the patent: **02.01.2019**
(21) Application number: 17152776.5
(22) Date of filing: 24.01.2017
(51) Int. Cl.: H02J 7/00

(54) **CONTROL UNIT FOR A BATTERY SYSTEM**
STEUERUNGSEINHEIT FÜR EIN BATTERIESYSTEM
UNITÉ DE COMMANDE POUR SYSTÈME DE BATTERIE

(43) Date of publication of application: 25.07.2018
(73) Proprietor: Samsung SDI Co., Ltd., Yongin-si, Gyeonggi-do 17084 (KR)
(72) Inventor: HOFER, Maximilian, 8230 Hartberg (AT); SCHMIEDHOFER, Christoph, 8020 Graz (AT)
(74) Representative: Gulde & Partner

(56) References cited:
- EP-A2- 0 972 327
- EP-A2- 1 531 535
- US-A1- 2011 141 643
- US-A1- 2012 286 591

## Description

### Field of the Invention

The present invention relates to a control unit for a battery system and to a battery system comprising such control unit.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. Such battery modules may be mechanically and electrically integrated, equipped with a thermal management system and set up for communication with each other and one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters, a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit may communicate with the electrical consumers via a suitable communication bus, e.g. a CAN or SPI interface.

A battery system may further comprise a protection system to provide a voltage level control of a power interface of the battery system and to enable a fast and reliable safety shutdown of the power interface in the case of non-permissible operating conditions. Such protection system may be adapted to shutdown an electrical connection between the serially connected cells and an external terminal of the battery system. A typical protection system comprises an electromechanical switch and a driving circuit, e.g. a relay with a corresponding relay circuit. The switch can be combined with a fuse that is serially connected to the switch and melts during a constant overload to backup the safety shutdown.

Protection systems based on electromechanical switches and fuses have several disadvantages. The relays and fuses incur additional costs and increase the installation space requirements of the battery system. Further, a relay-based electromechanical switch that is turned on always consumes power. And as the mechanical parts of a relay are failure-prone, protection systems based thereon provide only a limited lifetime. Furthermore, the mechanical switching times are limited due to the inertia.

In order to overcome these disadvantages power MOSFETs (Metal Oxide Semiconductor Field Effect Transistors) based solid state switches could be used in a battery system. Solid state switches beneficially provide faster switching times and lower power dissipation compared to electromechanical switches. Further, solid state switches may be integrated in a busbar used for an electrical interconnection inside a battery system and hence installation space and power dissipation may be decreased compared to electromechanical switches.

However, for fully exploiting the advantages of solid state switches, suitable driver circuits for the solid state switches are required as the driver circuits used in prior art battery systems with electromechanical switches are usually not capable of utilizing the potential switching times of solid state switches.

EP 1 531 535 A2 discloses integrated processing circuit with a microcontroller 30 and an overcurrent protection circuit for controlling protection switches via a FET driver as part of the microcontroller. US 2011/141643 A1 discloses a protective device for shutting of an electric connection based on a tripping condition, wherein a microcontroller determines the tripping condition based on the output of a comparator. EP 0 972 327 A2 discloses a battery system with cells and a battery protection system that comprises FET switches in a current path of the battery system that are controlled by a control logic circuit of a battery monitoring circuit. It is thus an object of the present invention to overcome or reduce at least some of the drawbacks of the prior art and to provide a driver circuit for a battery system comprising a solid state switch based protection system. The driver circuit shall be cheap, compact and robust, have low power dissipation and allows fast switching times.

### Summary of Invention

One or more of the drawbacks of the prior art could be avoided or at least reduced by means of the present invention, according to which a control unit for a battery system is provided that comprises the features of claim 1.

The programmable microcontroller (MCU) is configured for storing at least one programmed turnoff condition of the battery system and for outputting at least one threshold signal based on the at least one turn off condition. The driver circuit comprises (constitutes) a hardware path that is interconnected between the sensor interface and the switching interface. Therein the driver circuit is connected to the sensor interface for receiving a sensor signal via the sensor interface and is connected to the switching interface for outputting an interrupt signal via the switching interface. The driver circuit is further interface connected to the microcontroller for receiving the least one threshold signal from the microcontroller. In other words, the driver circuit is connected to an interface of the microcontroller.

The driver circuit comprises at least one comparator circuit that is configured for comparing a sensor signal received via the sensor interface with threshold signal a received from the microcontroller and is further configured for outputting an interrupt signal via the switching interface in response to an inadmissible operation condition of the battery system. In other words, while the turnoff condition is freely set (programmed) in the microcontroller, monitoring and safety shutdown functionalities with respect to a battery system are solely realized by the hardware path of the driver circuit. Hence, fast reaction and switching times are realized.

The comparator circuit of the driver circuit comprises a first comparator input node that is configured for receiving the sensor signal, preferably the amplified sensor signal. The comparator circuit may further comprise a second comparator input node that is configured for receiving a threshold signal from the microcontroller, preferably from a programmed comparator pin of the microcontroller. The comparator circuit is further configured for outputting the interrupt signal via a comparator output node, wherein the polarity and/or the amplitude of the interrupt signal depends on the ratio of the (amplified) sensor signal and the threshold signal. Exemplarily, a high voltage level may be output by the comparator circuit if the sensor signal exceeds the threshold signal, while a low level may be output if the threshold signal exceeds the sensor signal. The interrupt signal is then represented of the high level output by the driver circuit.

The MCU may comprise a memory element that is configured for storing the turnoff condition, a programming interface for receiving the turnoff condition, a processing unit for deriving the threshold signal from the turnoff condition and at least one interface for outputting the threshold signal. Further conditions may be stored in the memory element and the processing unit may be configured for deriving further signals from these conditions. The interface for outputting the signals may comprise a plurality of programmable output pins. Alternatively, the threshold and further signals may be stored directly in the MCU's memory element. Then a processing unit may be omitted. The programming interface may be a wireless interface.

The MCU may be programmed with a variety of different turnoff conditions for different battery system or application environments of a battery system via the programming interface. According to an embodiment, at least one turnoff condition relates to an overcurrent situation, wherein a security shutdown of the battery system shall occur. According to an embodiment, the sensor signal may be a voltage drop over a shunt resistance disposed within a current path of the battery system. In an embodiment, the threshold signal may be a derived as a voltage drop occurring in the overcurrent situation within the shunt resistance.

Therefore, the resistance of the shunt resistance may also be programmed to the MCU. Hence, threshold signal and sensor signal are easily compared in the driver circuit.

The control unit of to the invention advantageously realizes fast reaction times and hence switching times if connected to a solid state switch via the switching interface. The fast reaction times are realized by separating the driver circuit from the MCU. MCUs commonly utilized in battery systems realize processing and hence switching times in the magnitude of milliseconds. Across the hardware path of the driver circuit reaction and hence switching times in the order of microseconds are realized. Particularly preferred, the driver circuit is configured for outputting the interrupt signal in less than 10 µs, further preferred less than 5 µs and also preferred less than 3 µs after receiving the sensor signal. Also preferred at least one of the driver circuit and the microcontroller is an integrated circuit. The control unit of the invention is versatile by further allowing to freely set turnoff and other operation conditions by programing them into the MCU's memory element.

The MCU may further be programmed with different operation conditions for different operation modes. Exemplarily, for different operation modes different turnoff conditions can be set. According to an embodiment a higher turnoff condition, i.e. a higher discharging overcurrent, is programmed to the microcontroller for a starting mode of an electric engine connected to the battery system. Further, a lower turnoff condition, i.e. a lower discharging overcurrent, is programmed to the microcontroller for a cool down mode of the electric engine connected to the battery system, e.g. for after a vehicle comprising battery system and engine has stopped. Further preferred, the programming interface is configured for receiving an operation mode signal related to the choice of an operation mode and to set the microcontroller to apply the operation condition for the chosen operation mode in response to the received operation mode signal. Hence, the microcontroller outputs the threshold signal (delay signal, reset signal, activation signal) corresponding to the chosen operation mode. Hence, different requirements of the control unit with respect to different battery systems, different vehicles and/or different operation modes can be advantageously set by software, while fast switching times are always realized via the hardware path of the driver circuit.

According to a preferred embodiment, the driver circuit comprises an amplification circuit with at least one amplification input node that is configured for receiving the sensor signal. The amplification circuit is configured for outputting the amplified sensor signal via an amplification output node. Particularly, the amplification circuit is an input amplifier. Preferably the amplification circuit comprises a first amplification input node and a second amplification input node for receiving a voltage drop over a shunt resistor. The amplification circuit preferably comprises a differential amplifier interconnected between the first and second amplification input nodes and the amplification output node. Alternatively, the amplification circuit comprises an operational amplifier with external circuitry configured for (linearly) amplifying the sensor signal. Preferably, the amplification circuit decouples the current path through the current sensor and the measurement and comparator circuitry of the driver circuit.

Particularly preferred, the comparator circuit comprises a comparator element that is interconnected between the first and second comparator input nodes and the comparator output node. The comparator element preferably comprises an operational amplifier with the first and second comparator input node being connected to the inverting and non-inverting inputs of the amplifier, respectively. The specific wiring of the operational amplifier inputs depends on the current direction across the current sensor, e.g. whether the battery system is charged or discharged. The operational amplifier may be set up with positive feedback and/or the comparator element may comprise a comparator instead of the operational amplifier.

In a further preferred embodiment, the driver circuit comprises a delay circuit with a first delay input node that is configured for receiving the interrupt signal and a second delay input node that is configured for receiving a delay signal from the microcontroller, preferably from a programmed delay pin of the microcontroller. The delay circuit is configured for outputting the delayed interrupt signal via a delay output node, wherein the delay of the delayed interrupt depends on the delay signal. In other words, the delay circuit allows realizing a current/time characteristic as it is also known from fuse characteristics and the driver circuit is more stable against short term current variations. According to this embodiment, the microcontroller is further configured for storing a programmed delay condition and for outputting the delay signal based on the delay condition to the driver circuit. Preferably, the microcontroller comprises a programmable delay pin for outputting the delay signal.

The delay circuit may comprise a delay element interconnected between the delay input nodes and the delay output node. The delay element preferably comprises an operational amplifier with its non-inverting input being connected to the first delay input node and its inverting input being connected to the second delay input node. Further preferred, the delay element comprises a first RC element interconnected between the first delay input node and the non-inverting input of the operational amplifier and a second RC element interconnected between the second delay input node and the inverting input of the operational amplifier.

The first RC element may comprise a first resistor interconnected between the first delay input node and the non-inverting input of the operational amplifier and a first capacitor interconnected between ground and the non-inverting input of the operational amplifier. The second RC element may comprise a second resistor interconnected between the second delay input node and the inverting input of the operational amplifier and a second capacitor interconnected between ground and the inverting input of the operational amplifier. Preferably, the capacitance relation of the first and second capacitor is such that the voltage at the non-inverting input of the operational amplifier increases slower than the voltage at the inverting input. By appropriately setting the amplitude of the delay signal, the delay of the interrupt signal is precisely set. The interrupt signal remains undelayed if no delay signal is applied to the second delay input node.

In a further preferred embodiment, the driver circuit comprises a priming circuit with a first priming input node that is configured for receiving the interrupt signal, preferably the delayed interrupt signal, and with a second priming input node that is configured for receiving a reset signal from the microcontroller, preferably from a programmable reset pin of the microcontroller. The priming circuit is configured for latching (holding) the interrupt signal, i.e. for continuously outputting the interrupt signal via a priming output node, even if it is not output from the comparator circuit anymore. The priming circuit stops outputting the latched interrupt signal, once it receives the reset signal via the second priming input node.

Preferably, the priming circuit comprises a latch element, e.g. a flip flop or another bistable multivibrator, that is interconnected between the first and second priming input nodes and the priming output node. The latch element is configured to hold (to store) the interrupt signal until it receives the reset signal. Hence, the priming circuit realizes fuse functionality by holding the interrupt signal once it was output by the comparator circuit. By inputting the reset signal to the second priming input node the fuse is set back and the holding of the interrupt signal is stopped. Preferably, the reset signal may be output by the MCU in response to a reset command input to the MCU's programming interface. In this embodiment, the microcontroller is preferably configured for storing a programmed reset condition and for outputting the reset signal based on the reset condition to the driver circuit. Preferably, the microcontroller comprises a programmable reset pin for outputting the reset signal.

Further preferred, the driver circuit comprises a priming circuit with a first priming input node that is configured for receiving an interrupt signal and with a third priming input node that is configured for receiving an activation signal from the microcontroller, preferably from a programmable activation pin of the microcontroller. The priming circuit is then configured for outputting the (latched) interrupt signal only while receiving the activation signal. Hence, the priming circuit realizes a security function by operating the driver circuit only if the microcontroller is functional. Preferably the priming circuit comprises an activation element, e.g. an AND gate, that is interconnected between the first and third priming input nodes and the priming output node. Then the microcontroller is configured for storing a programmed activation condition and for outputting the activation signal based on the activation condition. The microcontroller also comprises a programmable activation pin for outputting the activation signal.

Particularly preferred, the priming circuit comprises the first priming input node, the second priming input node and the third priming input node as well as the latch element and the activation element and is configured for providing the resettable fuse functionality and the additional security function as described above. Also preferred, the microcontroller is configured for storing a programmed reset condition and a programmed activation condition and for outputting the reset signal based on the reset condition and the activation signal based on the activation condition. The microcontroller then comprises a programmable reset pin for outputting the reset signal a programmable activation pin for outputting the activation signal.

According to an embodiment, the driver circuit comprises a first hardware path with a first comparator circuit, a first delay circuit and a first priming circuit and a second hardware path with a second comparator circuit, a second delay circuit and a second priming circuit.

Therein, the first comparator circuit is configured for receiving a first threshold signal, preferably from a first programmable threshold pin of the microcontroller. The first delay circuit is configured for receiving a first delay signal, preferably from a first programmable delay pin of the microcontroller. The first priming circuit is configured for receiving at least one of a first reset signal and a first activation signal, preferably from at least one of a first programmable reset pin and a first programmable activation pin of the microcontroller. The second comparator circuit is configured for receiving a second threshold signal, preferably from a second programmable threshold pin of the microcontroller. The second delay circuit is configured for receiving a second delay signal, preferably from a second programmable delay pin of the microcontroller. The second priming circuit is configured for receiving at least one of a second reset signal and a second activation signal, preferably from at least one of a second programmable reset pin and a second programmable activation pin of the microcontroller.

Further preferred, the first comparator circuit comprises a first operational amplifier with its non-inverting input connected to the first comparator input node and its inverting input connected to the second comparator input node of the first comparator circuit. The second comparator circuit then comprises a second operational amplifier with its inverting input connected to the first comparator input node and its non-inverting input connected to the second comparator input node of the second comparator circuit.

Preferably, the first hardware path and second hardware path are connected in parallel between the sensor interface and the switching interface, further preferred the first hardware path and second hardware path are connected in parallel between an amplification output node of an input amplifier and the switching interface or a level shifting circuit interconnected between the driver circuit and the switching interface. This embodiment advantageously allows providing separate hardware paths for a charging and a discharging state of the battery system. Therein, each hardware path provides monitoring and switching functionality for one current direction within the current sensor. Hence, different turnoff conditions, delay conditions, reset conditions and activation conditions can be set for each of hardware path.

According to further preferred embodiment, the control unit and/or the driver circuit further comprises a level shifting circuit that is interconnected between the driver circuit and the switching interface for isolating the voltage domains of the battery system, e.g. a 48 V domain, and the voltage domain of the driving circuit, e.g. a 3.3 V, a 5 V or a 12 V domain. The level shifting circuit comprises at least one shifting input node for receiving an input voltage level from the driving circuit or a component of the driving circuit, e.g. the comparator circuit, the delay circuit or the priming circuit. The level shifting circuit is further configured to output an output voltage level that is based on the input voltage level via at least one shifting output node. Therein the level shifting circuit preserves the logical content of the input voltage level.

The level shifting circuit may be based on voltage dividers, transistors and preferably is based on operational amplifiers or electronic hardware components with comparable functionality. The level shifting circuit may further provide galvanic isolation between the driver circuit and the switching interface. The level shifting circuit may be a part of the driver circuit or may be external to the driver circuit. Further preferred the level shifting circuit comprises a first level shifter connected to the output of the first hardware path and a second level shifter connected to the output of the second hardware path. The level shifting circuit may further comprise voltage source supplying the first and second level shifter with the operation voltages of a solid state switch connected to the switching interface.

Another aspect of the present invention relates to a battery system with a first system terminal of a first polarity and a second system terminal of a second polarity and a plurality of battery cells connected in series between the first system terminal and the second system terminal. The battery system further comprises a current sensor that is configured for measuring an electric current to at least one of the first system terminal and second system terminal and for outputting a sensor signal based on the measured current. The battery system further comprises a solid state switch that is configured for interrupting the electric current to the at least one of the first system terminal and second system terminal in response to an interrupt signal. The battery system further comprises a control unit according to the invention as described above. Preferably, the battery system is a 48 V battery system.

In a preferred embodiment of the battery system, wherein each battery cell comprises a first cell terminal of a first polarity and a second cell terminal of a second polarity, the battery system further comprises at least one first busbar that is electrically interconnecting the first cell terminal of a battery cell with the second terminal of another battery cell. The battery system further comprises at least one second busbar that is electrically interconnecting the second terminal of a battery cell with the second system terminal. According to this embodiment, the current sensor comprises a shunt resistor that is integrated in a first busbar. Additionally or alternatively, the solid state switch is integrated in a second busbar.

If the current sensor comprises a shunt resistance, the shunt has a well defined ohmic resistance. Preferably, the shunt comprises a voltage drop of not more than 100 mV, preferably not more than 75 mV and particularly preferred not more than 50 mV at its maximum current, wherein the maximum current is a current of 250 A, preferably of 500 A and particularly preferred of 750 A. The shunt may also comprise an ohmic resistance between 10 µΩ and 200 µΩ, further preferred between 25 µΩ and 150 µΩ and particularly preferred between 50 µΩ and 100 µΩ. Further, the temperature coefficient of the shunt's resistance is preferably small, particularly preferred below 100 ppm, further preferred below 75 ppm and particularly preferred below 50 ppm. Further preferred, the shunt resistance comprises or consists of Manganin, i.e. an alloy of 86 %copper, 12 % manganese and 2 % nickel. Alternatively, the shunt comprises or consists of constantan, i.e. an alloy of 55 %copper and 45 % nickel. Preferably, this information is stored in the memory element of the microcontroller.

If the current sensor of the battery system comprises a shunt resistor it further comprises a first sensor node upstream the shunt and a second sensor node downstream the shunt for detecting the voltage drop over the shunt. Preferably, the first sensor node is connected to the first amplification input node of the driver circuit and the second sensor node is connected to the second amplification input node of the driver circuit via the sensor interface of the control unit. Preferably, the control unit then comprises a sensor interface with a first sensor contact pad interconnected between the first sensor node and the first amplification input node and with a second sensor contact pad interconnected between the second sensor node and the second amplification input node.

The solid state switch is adapted to switch an electrically conductive connection, i.e. a current, to one of the first system terminal and the second system terminal. The solid state switch preferably comprises a first switch terminal and a second switch terminal. Preferably, the solid state switch is adapted to digitally switch between an ON-state and an OFF-state, wherein in the ON-state the first switch terminal and the second switch terminal are electrically conductively connected and in the OFF-state the first switch terminal and the second switch terminal are electrically isolated from one another.

In the context of the present invention, a solid state switch (SSS), e.g. a solid state relay (SSR) or a solid state contactor (SSC), is a microelectronic device based on semiconductor technology. In contrast to conventional electro-mechanical switching technologies (i.e. conventional relays), solid state switches require no moving parts and allow absolutely quite operations. Due to their higher shock and vibration resistance they are ideal for application in harsh environments and allow ultrafast switching times (response to control signals in less that 100 µs). However, other kinds of SSS may also be applied in battery system. For example, SSSs based on micro-electro-mechanical systems (MEMS) or micro-electro-opto-mechanical systems (MOEMS) can be integrated in the battery system.

Preferably, the SSS comprises at least one field-effect transistor (FET). A FET is a microelectronic transistor that uses an electric field, which is applied between a gate contact and a source contact of the device, to control the electrical conductivity between the drain contact and the source contacts of the device. For a SSS, different kinds of FETs can be used. Preferably, a FET is a metal-oxide-semiconductor field-effect transistor (MOSFET). More preferably, the FET is a rear surface contact MOSFET, wherein the drain contact is located on the rear surface of the device and wherein the gate and the source contacts of the device are located on the top surface. All contact regions of the FET may be adapted to be electrically connected by physically contacting external contacts, by soldering, electrically conductive gluing, or by wiring (e.g. via wire bonds). Preferably, a SSS is defined by individual switching devices or switching elements (e.g. a FET) and the specific wiring scheme for connecting these devices.

The control unit may comprise a circuit carrier such as a flexible circuit board (FCP) or a printed circuit board (PCB) and the sensor interface and or the switching interface may comprise contact pads formed as surface metallizations of the FCP or PCB. The control unit further comprises conducting connections between the sensor interface and the driver circuit and between the driver circuit and the switching interface. The conducting connections may be based on surface metallizations, internal metallizations or conductive polymers. The MCU and the driver circuit may also be connected via conducting connections or via wire bonding.

Further preferred, the sensor interface is wire bonded to the current sensor. Exemplarily, each of the sensor interface's sensor contact pads may be wire bonded to one of the sensor nodes. Also preferred, the switching interface is wire bonded to the solid state switch, particularly to a gate electrode of a solid state switch. The wire bonds preferably comprise one or more of aluminum, copper, silver and gold.

According to yet another aspect of the present invention, a vehicle including a battery system and/ or a control unit as defined above is provided.

Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Fig. 1: illustrates a battery system according to an embodiment;
- Fig. 2: illustrates a control unit according to an embodiment;
- Fig. 3: schematically illustrates a battery system with a control unit according to a first embodiment;
- Fig. 4: schematically illustrates a battery system with a driver circuit according to first embodiment;
- Fig. 5: schematically illustrates a battery system with a driver circuit according to a second embodiment; and
- Fig. 6: illustrates a circuit diagram of battery system with a driver circuit according to a third embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

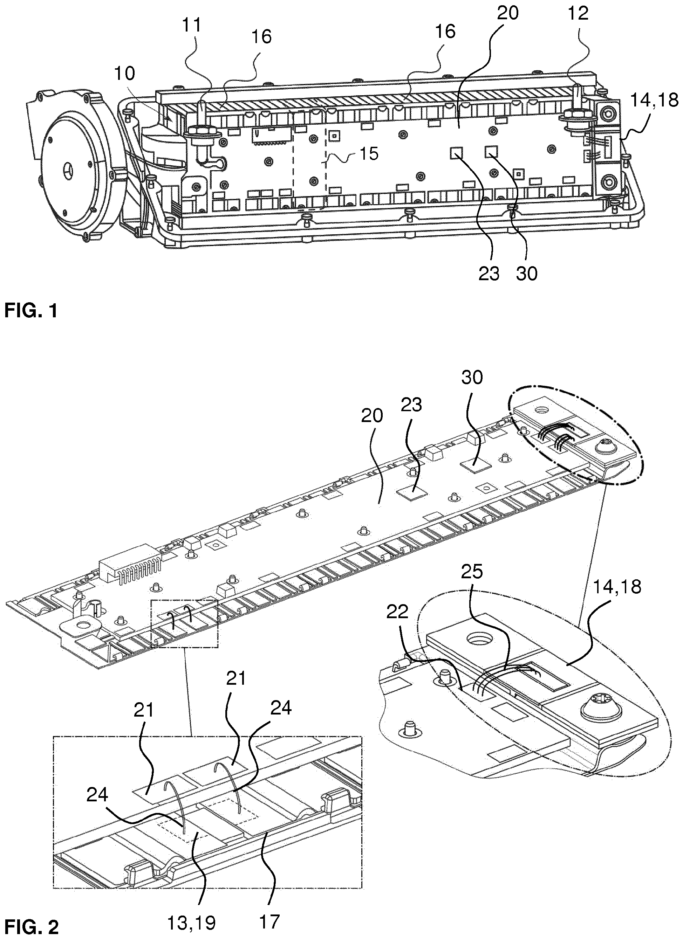

Figure 1 and 2 illustrate a battery system 10 and a control unit 20 according to the present invention, wherein the control unit 20 illustrated in Figure 2 is mounted to a side surface of the battery system 10 illustrated in Figure 1.

In the battery system 10 a plurality of prismatic battery cells 16 are stacked in a length direction of the battery system 10, such that wide side surfaces of adjacent battery cells 16 face each other. Two battery cells 16 are electrically connected in parallel to form a battery cell module 15. In the battery system 10, subsequent battery cell modules 15 are arranged with alternating polarities. In other words, a first battery cell module comprises two terminals of a first polarity on an upper side of the illustrated battery system 10 and two terminals of a second polarity on a lower side of the illustrated battery system 10. An adjacent second battery cell module 15 comprises two terminals of a second polarity on an upper side of the illustrated battery system 10 and two terminals of a first polarity on a lower side of the illustrated battery system 10.

The battery system 10 further comprises a plurality of first busbars 17, wherein each busbar 17 electrically connects two battery cells 16 in parallel and connects two battery modules 15 in series. Exemplarily, two terminals with second polarity on the lower side of the illustrated battery system 10 of a first battery cell module 15 and two terminals with first polarity on the lower side of the illustrated battery system 10 of a second battery cell module 15 are electrically interconnected via a first busbar 17 in order to electrically connect the battery cell modules 15 in series. The plurality of battery cell module 15 stacked in the battery system 10 are thus electrically connected in series between the first system terminal 11 and the second system terminal 12 of the battery system 10.

The battery system 10 further comprises a control unit 20 that is mechanically connected to a side surface of the battery system 10. The control unit 20 comprises a circuit board (PCB) with a plurality of surface mounted electric components and with conductive connections for partially interconnecting these electric components. Particularly, the control unit 20 comprises a sensor interface 21 that is electrically connected to a shunt resistance 19, which is integrated in the first busbar 17. The shunt resistance 19 is a current sensor 13 that is disposed in a current path to the second system terminal 12. The sensor interface 21 comprises a first sensor pad and a second sensor pad, which are independently connected to the shunt resistor via a respective wire bond 24.

The sensor pads of the sensor interface 21 are electrically connected via conductive connections (not shown) with a driver circuit 30 that is an integrated circuit surface mounted to the control unit 20. Separate from this conductive connection, the driver circuit 30 is electrically connected to a programmable microcontroller 23 that is an integrated circuit surface mounted to the control unit 20. The microcontroller 23 is a battery management unit providing a plurality of functions with respect to the battery system 10, e.g. monitoring and setting of operating states of the battery system 10, evaluating of a state of charge of the battery system 10 and communication with electrical loads connected to the battery system 10. Separate from these conductive connections, the microcontroller 23 is electrically connected to a switching interface 22.

The control unit 20 further comprises a switching interface 22 with a contact pad on the top surface of the control unit 20 that is electrically connected to a solid state switch 14. Therein, the solid state switch 14 is electrically is structurally and electrically integrated in a second busbar 18. Particularly, the switching interface 22 is electrically connected to a gate electrode of the solid state switch 14 via wire bond 25. The second busbar 18 is interconnected between a second cell terminal of a battery cell 16 and the second system terminal 12. Dependent on a switching signal applied to the gate electrode, the solid state switch 14 within second busbar 18 provides a conducting or non-conducting connection between the second cell terminal of a battery cell 16 and the second system terminal 12.

The second bus bar 18 preferably comprises two FETs that are preferably rear surface contacted power MOSFETs with their corresponding drain contacts being interconnected at the surface of the second busbar 18 and commonly contacted by wire bond 25. Preferably, each of the MOSFETs is a NVD6416ANL n-channel power MOSFET.

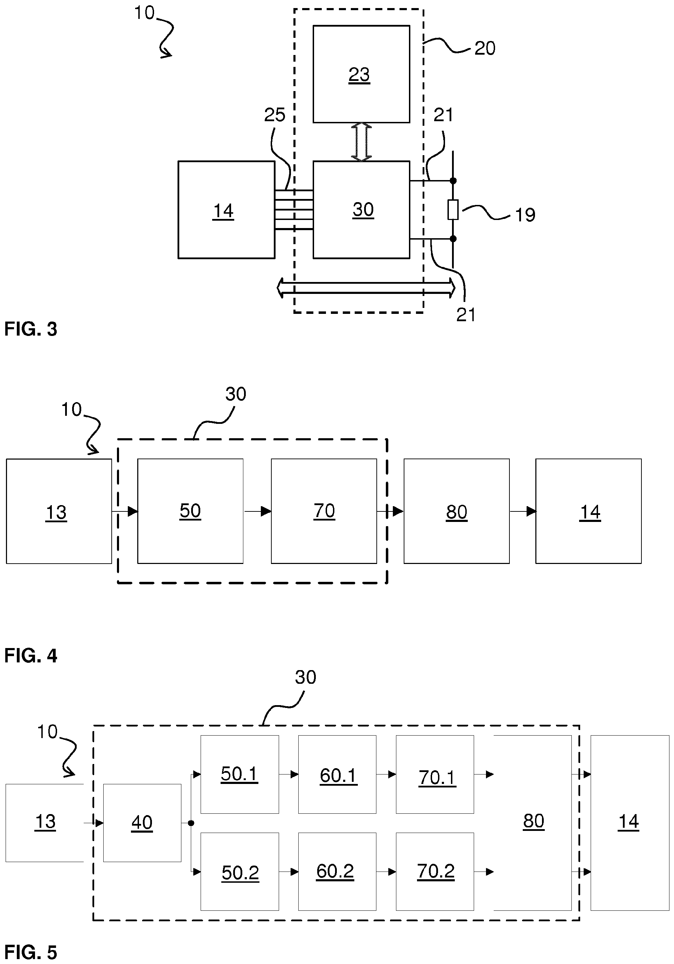

Figure 3 schematically illustrates a battery system 10 with a control unit 20 according to a first embodiment. The battery system 10 comprises a shunt resistance 19 as a current sensor that is connected via two bond wires 24 to a sensor interface 21 of control unit 20. The control unit 20 comprises a driver circuit 30 that is electrically connected to the sensor interface 21 and that is further electrically connected to a switching interface 22. A solid state switch 14 is connected to the switching interface 22 via bond wires 25. The control unit 20 provides a hardware path between the sensor shunt 19 and the switch 14 via the driver circuit 30. The control unit 20 further comprises a programmable microcontroller 23 that is interface connected with the drive circuit 30. The microcontroller 23 comprises a memory element for storing at least one operation condition of the battery system 10, a processing unit for deriving at least one output signal based on the at least one operation condition and at least one output pin for outputting the at least one output signal.

The microcontroller 23 comprises a plurality of output pins that are wire bonded to respective input nodes of the driver circuit 30. The data transmission of the at least on output signal across this interface connection, illustrated by a vertical arrow in Figure 3, is limited in speed by the processing time of the microcontroller 23 (common MCU for battery system) that is in the timescales of milliseconds. The data transmission across the hardware path between the current sensor shunt 19 and the solid state switch 14 via the driver circuit 30, illustrated by a horizontal arrow in Figure 3, occurs much faster in timescales of microseconds and hence fast switching times of switch 14 are realized with the driver circuit of control unit 20.

Figure 4 schematically illustrates a battery system 10 with a driver circuit 30 according to first embodiment. The battery system 10 comprises the current sensor 13 that is connected via the driver circuit 30 and a level shifting circuit 80 to the solid state switch 14. The driver circuit 30 comprises a comparator circuit 50 that receives a sensor signal from the current sensor 13 as an input. The comparator circuit 50 further receives a threshold signal from a microcontroller pin. The comparator circuit 50 outputs an interrupt signal to a priming circuit 70 if the sensor signal indicates an inadmissible operation state in relation to the threshold signal. The priming circuit 70 latches the interrupt signal and, if it receives an activation signal from a microcontroller, outputs it to a level shifting circuit 80. The level shifting circuit 80 is external to the driver circuit 30 and shifts the voltage level of the interrupt signal to a voltage level suitable for actuating the gate electrode of the solid state switch 14.

Preferably, the driver circuit 30 operates in a 3.3 V voltage domain, while the solid state switch 14 is arranged in the 48 V battery system 10.

Figure 5 schematically illustrates a battery system 10 with a driver circuit 30 according to second embodiment. The battery system 10 comprises a current sensor 13 that is connected via the driver circuit 30 to the solid state switch 14. The driver circuit 30 comprises an amplification circuit 40 that receives a sensor signal from the current sensor 13 as an input. In contrast to the driver circuit 30 of Figure 4 the level shifting circuit 80 is integrated in the driver circuit 30. Further, a first hardware path and a second hardware path are connected in parallel between the amplification circuit 40 and the level shifting circuit 80.

The first hardware path comprises a first comparator circuit 50.1, a first delay circuit 60.1, a first priming circuit 70.1 and the second hardware path comprises a second comparator circuit 50.2, a second delay circuit 60.2 and a second priming circuit 70.2. Each of the comparator circuits 50.1, 50.2 receives a sensor signal from the current sensor 13 as an input. The first comparator circuit 50.1 further receives a first threshold signal from a first threshold microcontroller pin and the second comparator circuit 50.2 further receives a second threshold signal from a second threshold microcontroller pin. Each of the comparator circuits 50.1, 50.2 outputs an interrupt signal to a respective delay circuit 60.1, 60.2 if the sensor signal indicates an inadmissible operation state of the battery system 10 in relation to the respective threshold signal.

One of the delay circuits 60.1, 60.2 receives the interrupt signal from the respective comparator circuit 50.1, 50.2. The first delay circuit 60.1 further receives a first delay signal from a first delay microcontroller pin and the second delay circuit 60.2 further receives a second delay signal from a second delay microcontroller pin. The delay circuits 60.1, 60.2 delay the received interrupt signal based on the received delay signal and output the delayed interrupt signal to a respective priming circuit 70.1, 70.2.

One of the priming circuits 70.1, 70.2 latches the received interrupt signal and, if it further receives an activation signal from a microcontroller, outputs it to a level shifting circuit 80. The level shifting circuit 80 shifts the voltage level of the interrupt signal to a voltage level suitable for actuating the gate electrode of solid state switch 14. Preferably, the driver circuit operates at a 3.3 V domain, while the solid state switch 14 is arranged in the 48 V battery system 10.

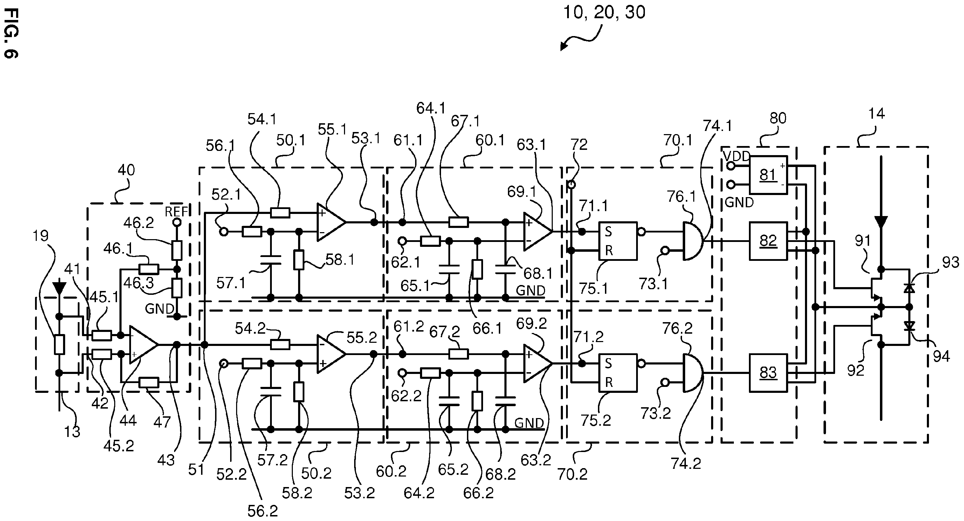

Figure 6 illustrates a circuit diagram of battery system 10 with a driver circuit 30 according to a third embodiment. The driver circuit 30 differs from that of the second embodiment at least in that the level shifting circuit 80 is external to the driver circuit 30. According to the third embodiment, the driver circuit 30 comprises an input amplification circuit 40, comparator circuits 50.1, 50.2, delay circuits 60.1, 60.2 and priming circuits 70.1, 70.2.

The battery system 10 further comprises a current sensor 13 comprising a shunt resistor 19. A discharging current indicated by an arrow flows through the shunt resistor 19. With respect to the discharging current the current sensor 13 comprises a first sensor node upstream the shunt 19 and a second sensor node downstream the shunt 19. The first sensor node is connected to a first amplification input node 41 and the second sensor node is connected to a second amplification input node 42 of an amplification circuit 40.

The amplification circuit 40 further comprises an operational amplifier 44. An inverting input of the OP 44 is connected to the first amplification input node 41 via resistor 45.1 and is further connected to a reference voltage REF via a resistor network 46 that comprises the resistors 46.1, 46.2 and 46.3. The non-inverting input of the OP 44 is connected to the second amplification input node 42 via resistor 45.2 and is further connected to an amplification output node 43 via the resistor 47. Hence, the OP 44 amplifies the voltage drop over the shunt resistor 19 (sensor signal) and outputs the amplified sensor signal via the amplification output node 43.

A first comparator circuit 50.1 is part of a first hardware path interconnected between the amplification circuit 40 and the level shifting circuit 80 and comprises a first comparator input node 51 that is connected to the amplification output node 43 and a second comparator input node 52.1 that is connected to a comparator output pin of a microcontroller. The first comparator circuit 50.1 further comprises an operational amplifier 55.1. The non-inverting input of the OP 55.1 is connected to the first comparator input node 51 via resistor 54.1 and the inverting input of the OP 55.1 is connected to the second comparator input node 52.1 via resistor 56.1. Further, a capacitor 57.1 and a resistor 58.1 are interconnected in parallel between the inverting input of OP 55.1 and ground. Hence, OP 55.1 outputs a high voltage level via a comparator output node 53.1 if the amplified voltage drop over the shunt resistor 19 indicates a discharge current through the shunt resistor 19 that is higher than a discharge current indicated by a discharge threshold signal received via the second comparator input node 52.1 and outputs a low voltage level via the comparator output node 53.1 elsewise.

A first delay circuit 60.1 comprises a first delay input node 61.1 that is connected to the comparator output node 53.1. The first delay input node 61.1 is connected to a non-inverting input of an operational amplifier 69.1 via a resistor 67.1. Further, a capacitance 68.1 is interconnected between the non-inverting input of OP 69.1 and ground. The first delay circuit 60.1 further comprises a second delay input node 62.1 that is connected to a delay output pin of a microcontroller. The second delay input node 62.1 is connected to the inverting input of OP 69.1 via a resistor 64.1. Further, a capacitance 65.1 and a resistor 66.1 are connected in parallel between the inverting input of OP 69.1 and ground. The capacitance of the capacitor 65.1 is smaller than the capacitance of capacitor 68.1 and hence the voltage at capacitor 65.1 increases faster than that at capacitor 68.1. Hence, if the discharge delay signal is of a comparable level as the interrupt signal, the first delay circuit 60.1 delays the interrupt signal before connecting it through to delay output node 63.1.

A first priming circuit 70.1 comprises a first priming input node 71.1 that is connected to the delay output node 63.1. The first priming input node 71.1 is connected to the set input of a flip flop 75.1 that is operated in non-transparent mode. Hence, the flip flop 75.1 outputs a high level interrupt signal once a high level interrupt signal was supplied to the first priming input node 71.1. The first priming circuit 70.1 further comprises a second priming input node 72 that is connected to a delay output pin of a microcontroller. Once, a discharge reset signal is received from the microcontroller via the second priming input node 72 the flip flop 75.1 is reset and hence stops outputting the high level interrupt signal until a high level interrupt signal is again supplied to the first priming input node 71.1.

The first priming circuit 70.1 further comprises an AND gate 76.1 with a first input connected to the output of flip flop 75.1 and a second input connected to a third priming circuit input node 73.1 that is connected to an activation output pin of a microcontroller. The AND gate 76.1 outputs a high level interrupt signal via a priming output node 74.1 only while it receives a discharge activation signal received via the third priming input node 73.1 and outputs a low level via the priming output node 74.1 elsewise.

The control unit 20 of the battery system 10 further comprises a level shifting circuit 80 with a first level shifter 82 comprising a first input connected to the priming output node 74.1 and further input nodes connected to operation voltages VDD and GND, respectively, via a galvanic isolation circuit 81. The first level shifter 82 transfers the voltage level of the interrupt signal that is output via the priming output node 74.1 to a voltage level of a first N-channel MOSFET 91. The level shifting circuit 80 thus isolates the voltage domain of the driver circuit 30, i.e. a 3.3. V voltage domain, and the voltage domain of the solid state switch 14 that is arranged in a current path of the 48 V battery system 10.

The solid state switch 14 comprises the first N-channel MOSFET 91 that is connected in parallel with first diode 93 in a current path of the battery system 10. The first diode 93 is oriented such that a discharging current can flow across solid state switch 14 only if the MOSFET 91 is set conductive, while a charging current can flow through solid state switch 14 independently of the state of MOSFET 91. The MOSFET 91 is set conductive if the level shifted high level interrupt signal is supplied to the gate of MOSFET 91. The level shifted high level interrupt signal is supplied to the gate of MOSFET 91 within less than 1 microsecond once an discharging overcurrent flows across shunt resistor 19 (at least without a set delay).

Hence, the first hardware path between the amplification circuit 40 and the level shifting circuit 80 comprising the first comparator circuit 50.1, the first delay circuit 60.1 and the first priming circuit 70.1 provides an overcurrent protection with respect to a discharge current of battery system 10. Therein, an interrupt signal caused by a discharge overcurrent is delayed via the first delay circuit 60.1 in order to provide stability against short term current spikes. A fuse functionality is thus realized by the first comparator circuit 50.1 and the first delay circuit 60.1. The fuse can be reset by a discharge reset signal received and is further secured by a discharge activation signal, each provided to the first priming circuit 70.1 by a microcontroller.

A second comparator circuit 50.2 is part of a second hardware path that is interconnected between the amplification circuit 40 and the level shifting circuit 80 and comprises a comparator input node 51 that is connected to the amplification output node 43 and a second comparator input node 52.2 that is connected to a comparator output pin of a microcontroller. The second comparator circuit 50.2 further comprises an operational amplifier 55.2. The inverting input of the OP 55.2 is connected to the first comparator input node 51 via resistor 54.2 and the non-inverting input of the OP 55.2 is connected to the second comparator input node 52.2 via resistor 56.2. Further, a capacitor 57.2 and a resistor 58.2 are interconnected in parallel between the non-inverting input of OP 55.2 and ground. Hence, OP 55.2 outputs a high voltage level via a comparator output node 53.2 if the amplified voltage drop over the shunt resistor 19 indicates a charging current through the shunt resistor 19 that is higher than a charging current indicated by a charge threshold signal received via the second comparator input pin 52.2 and outputs a low voltage level via the comparator output node 53.2 elsewise.

A second delay circuit 60.2 comprises a first delay input node 61.2 that is connected to the comparator output node 53.2. The first delay input node 61.2 is connected to a non-inverting input of an operational amplifier 69.2 via a resistor 67.2. Further, a capacitance 68.2 is interconnected between the non-inverting input of OP 69.2 and ground. The second delay circuit 60.2 further comprises a second delay input node 62.2 that is connected to a delay output pin of a microcontroller. The second delay input node 62.2 is connected to the inverting input of OP 69.2 via a resistor 64.2. Further, a capacitance 65.2 and a resistor 66.2 are connected in parallel between the inverting input of OP 69.2 and ground. The capacitance of the capacitor 65.2 is smaller than the capacitance of capacitor 68.2 and hence the voltage at capacitor 65.2 increases faster than that at capacitor 68.2. Hence, if the discharge delay signal is of comparable level as the interrupt signal, the second delay circuit 60.2 delays the interrupt signal before connecting it through to delay output node 63.2.

A second priming circuit 70.2 comprises a first priming input node 71.2 that is connected to the delay output node 63.2. The first priming input node 71.2 is connected to the set input of a flip flop 75.2 that is operated in non-transparent mode. Hence the flip flop 75.2 outputs a high level interrupt signal once a high level interrupt signal was supplied to the first priming input node 71.2. The first priming circuit 70.2 further comprises a second priming input node 72.2 that is connected to a delay output pin of a microcontroller. Once, a charge reset signal is received from the microcontroller via the second priming input node 72.2 the flip flop 75.2 is reset and hence stops outputting the high level interrupt signal until a high level interrupt signal is again supplied to the first priming input node 71.2.

The second priming circuit 70.2 further comprises an AND gate 76.2 with a first input connected to the output of flip flop 75.2 and a second input connected to a third priming circuit input node 73.2 that is connected to an activation output pin of a microcontroller. The AND gate 76.2 outputs a high level interrupt signal via a priming output node 74.2 only while it receives a charge activation signal received via the third priming input node 73.2 and outputs a low level via the priming output node 74.2 elsewise.

The control unit 20 of the battery system 10 further comprises an level shifting circuit 80 comprising a second level shifter 83 with a first input connected to the priming output node 74.2 and further input nodes connected to operation voltages VDD and GND, respectively, via a galvanic isolation circuit 80. The second level shifter 83 transfers the voltage level of the interrupt signal that is output via the priming output node 74.2 to a voltage level of a second N-channel MOSFET 92.

The solid state switch 14 comprises the second first N-channel MOSFET 92 that is connected in parallel with second diode 94 in a current path of the battery system 10. The second diode 94 is oriented such that a charging current can flow across the solid state switch 14 only if the MOSFET 92 is set conductive, while a discharging current can flow through the solid state switch 14 independently of the state of the MOSFET 92. The MOSFET 92 is set conductive if the level shifted high level interrupt signal is supplied to the gate of MOSFET 92. The level shifted high level interrupt signal is supplied to the gate of MOSFET 92 within less than 1 microsecond once a charging overcurrent flows across shunt resistor 19 (at least without a set delay).

Hence, the second hardware path between the amplification circuit 40 and the level shifting circuit 80 comprising the second comparator circuit 50.2, the second delay circuit 60.2 and the second priming circuit 70.2 provides an overcurrent protection with respect to a charge current of the battery system 10. Therein, an interrupt signal caused by an overcharge current is delayed via second delay circuit 60.2 in order to provide stability against short term current spikes. A fuse functionality is thus realized by the second comparator circuit 50.2 and the first delay circuit 60.2. The fuse can be reset by a charge reset signal and is further secured by a charge activation signal, each provided to the second priming circuit 70.2.

The electronic or electric devices and/or any other relevant devices or components according to embodiments of the present invention described herein, except those described explicitly as hardware, may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

## Claims

1. Control unit (20) for a battery system (10), comprising
a sensor interface (21) configured for being connected to a current sensor (19);
a switching interface (22) configured for being connected to a solid state switch (14);
a programmable microcontroller (23) configured for storing at least one programmed turnoff condition of the battery system (10) and outputting at least one threshold signal based on a respective turnoff condition; and
a driver circuit (30) being interconnected as hardware path between the sensor interface (21) for receiving a sensor signal and the switching interface (22) for outputting an interrupt signal and being interface connected to the microcontroller (23) for receiving the least one threshold signal,
wherein the driver circuit (30) comprises at least one comparator circuit (50) configured for comparing the sensor signal with the at least one threshold signal and for outputting the interrupt signal in an inadmissible operation condition of the battery system (10),
**characterized in that** the comparator circuit (50) comprises a first comparator input node (51) configured for receiving the sensor signal, a second comparator input node (52) configured for receiving a freely set threshold signal from the microcontroller (23), and **in that** the comparator circuit (50) is configured for outputting the interrupt signal via a comparator output node (53) with a polarity and/or an amplitude depending on the ratio of the sensor signal and the threshold signal..

2. Control unit (20) according to claim 1, wherein the driver circuit (30) further comprises an amplification circuit (40) with at least one amplification input node (41, 42) configured for receiving the sensor signal,
wherein the amplification circuit (40) is configured for outputting the amplified sensor signal via an amplification output node (43).

3. Control unit (20) according to any one of the claims 1 and 2,
the driver circuit (30) further comprising a delay circuit (60) with a first delay input node (61) configured for receiving the interrupt signal and a second delay input node (62) configured for receiving a delay signal from the microcontroller (23), wh
erein the delay circuit (60) is configured for outputting the delayed interrupt signal via a delay output node (63) with a delay depending on the delay signal.

4. Control unit (20) according to claim 3, wherein the microcontroller (23) is further configured for storing a programmed delay condition and for outputting to the driver circuit (30) the delay signal based on the delay condition.

5. Control unit (20) according to any one of the claims 1 to 4,
the driver circuit (30) further comprising a priming circuit (70) with a first priming input node (71) configured for receiving the interrupt signal and a second priming input node (72) configured for receiving a reset signal from the microcontroller (23),
wherein the priming circuit (70) is configured for outputting the latched interrupt signal via a priming output node (74) until receiving the reset signal.

6. Control unit (20) according to claim 5, wherein the microcontroller (23) is further configured for storing a programmed reset condition and for outputting to the driver circuit (30) the reset signal based on the reset condition.

7. Control unit (20) according to any one of the claims 1 to 6,
the driver circuit (30) further comprising a priming circuit (70) with a first priming input node (71) configured for receiving an interrupt signal and a third priming input node (73) configured for receiving an activation signal from the microcontroller (23),
wherein the priming circuit (70) is configured for outputting the interrupt signal only while receiving the activation signal.

8. Control unit (20) according to claim 7, wherein the microcontroller (23) is further configured for storing a programmed activation condition and for outputting to the driver circuit (30) the activation signal based on the activation condition.

9. Control unit (20) according to any one of claims 1 to 8, the driver circuit (30) comprising
a first hardware path (31) comprising a first comparator circuit (50.1) configured for receiving a first threshold signal, a first delay circuit (60.1) configured for receiving a first delay signal and a first priming circuit (70.1) configured for receiving at least one of a first reset signal and a first activation signal, and
a second hardware path (32) comprising a second comparator circuit (50.2) configured for receiving a second threshold signal, a second delay circuit (60.1) configured for receiving a second delay signal and a second priming circuit (70.1) configured for receiving at least one of a second reset signal and a second activation signal.

10. Control unit (20) according to any one of the claims 1 to 9, further comprising a level shifting circuit (80) interconnected between the driver circuit (30) and the switching interface (22).

11. Control unit (20) according to any one of the claims 1 to 10, wherein the driver circuit (30) is configured for outputting the interrupt signal in less than 10 microseconds after receiving the sensor signal.

12. Control unit (20) according to any one of the claims 1 to 11, wherein at least one of the driver circuit (30) and the microcontroller (23) is an integrated circuit.

13. Battery system (10), comprising
a first system terminal (11) of a first polarity and a second system terminal (12) of a second polarity and a plurality of battery cells (15) connected in series between the first system terminal (11) and the second system terminal (12),
a current sensor (13) configured for measuring an electric current to at least one of the first system terminal (11) and second system terminal (12) and for outputting a sensor signal based on the measured current;
a solid state switch (14) configured for interrupting the electric current to the at least one of the first system terminal (11) and second system terminal (12) in response to an interrupt signal; and
a control unit (20) according to any one of the claims 1 to 12.

14. Battery system (10) according to claim 13, wherein each battery cell (15) comprising a first cell terminal (11) of a first polarity and a second cell terminal (12) of a second polarity; further comprising
at least one first busbar (17) electrically connecting the first cell terminal of a battery cell (15) with the second terminal of another battery cell (15);
at least one second busbar (18) electrically connecting the second terminal of a battery cell (15) with the second system terminal (12),
wherein the current sensor (13) comprises a shunt resistor (19) integrated in a first busbar (17), and/or
wherein the solid state switch (14) is integrated in a second busbar (18).

## Patentansprüche

1. Steuerungseinheit (20) für ein Batteriesystem (10), aufweisend
eine Sensorschnittstelle (21), die konfiguriert ist, um mit einem Stromsensor (19) verbunden zu sein;
eine Schaltschnittstelle (22), die konfiguriert ist, um mit einem Festkörperschalter (14) verbunden zu sein;
einen programmierbaren Mikrocontroller (23), der konfiguriert ist, um zumindest eine programmierte Ausschaltbedingung des Batteriesystems (10) zu speichern und zumindest ein Schwellensignal basierend auf einer jeweiligen Ausschaltbedingung auszugeben; und
eine Treiberschaltung (30), die als Hardware-Pfad zwischen die Sensorschnittstelle (21) zum Empfangen eines Sensorsignals und die Schaltschnittstelle (22) zum Ausgeben eines Unterbrechungssignals geschaltet ist und mit dem Mikrocontroller (23) zum Empfangen des zumindest einen Schwellensignals schnittstellenartig verbunden ist,
wobei die Treiberschaltung (30) zumindest eine Komparatorschaltung (50), die konfiguriert ist, um das Sensorsignal mit dem zumindest einen Schwellensignal zu vergleichen und um das Unterbrechungssignal in einer unzulässigen Betriebsbedingung des Batteriesystems (10) auszugeben, aufweist,
**dadurch gekennzeichnet, dass**
die Komparatorschaltung (50) einen ersten Komparatoreingangsknoten (51), der konfiguriert ist, um das Sensorsignal zu empfangen, einen zweiten Komparatoreingangsknoten (52), der konfiguriert ist, um ein frei eingestelltes Schwellensignal vom Mikrocontroller (23) zu empfangen, aufweist, und
dadurch, dass die Komparatorschaltung (50) konfiguriert ist, um das Unterbrechungssignal über einen Komparatorausgangsknoten (53) mit einer Polarität und/oder einer Amplitude, die vom Verhältnis des Sensorsignals und des Schwellensignals abhängen/abhängt, auszugeben.

2. Steuerungseinheit (20) nach Anspruch 1, wobei die Treiberschaltung (30) ferner eine Verstärkungsschaltung (40) mit zumindest einem Verstärkungseingangsknoten (41, 42), der konfiguriert ist, um das Sensorsignal zu empfangen, aufweist,
wobei die Verstärkungsschaltung (40) konfiguriert ist, um das verstärkte Sensorsignal über einen Verstärkungsausgangsknoten (43) auszugeben.

3. Steuerungseinheit (20) nach einem der Ansprüche 1 und 2,
wobei die Treiberschaltung (30) ferner eine Verzögerungsschaltung (60) mit einem ersten Verzögerungseingangsknoten (61), der konfiguriert ist, um das Unterbrechungssignal zu empfangen, und einem zweiten Verzögerungseingangsknoten (62), der konfiguriert ist, um ein Verzögerungssignal vom Mikrocontroller (23) zu empfangen, aufweist,
wobei die Verzögerungsschaltung (60) konfiguriert ist, um das verzögerte Unterbrechungssignal über einen Verzögerungsausgangsknoten (63) mit einer Verzögerung, die vom Verzögerungssignal abhängt, auszugeben.

4. Steuerungseinheit (20) nach Anspruch 3, wobei der Mikrocontroller (23) ferner konfiguriert ist, um eine programmierte Verzögerungsbedingung zu speichern und um das Verzögerungssignal basierend auf der Verzögerungsbedingung an die Treiberschaltung (30) auszugeben.

5. Steuerungseinheit (20) nach einem der Ansprüche 1 bis 4,
wobei die Treiberschaltung (30) ferner eine Vorbereitungsschaltung (70) mit einem ersten Vorbereitungseingangsknoten (30), der konfiguriert ist, um das Unterbrechungssignal zu empfangen, und einem zweiten Vorbereitungseingangsknoten (72), der konfiguriert ist, um ein Reset-Signal vom Mikrocontroller (23) zu empfangen, aufweist,
wobei die Vorbereitungsschaltung (70) konfiguriert ist, um das gehaltene Unterbrechungssignal bis zum Empfang des Reset-Signals über einen Vorbereitungsausgangsknoten (74) auszugeben.

6. Steuerungseinheit (20) nach Anspruch 5, wobei der Mikrocontroller (23) ferner konfiguriert ist, um eine programmierte Reset-Bedingung zu speichern und um das Reset-Signal basierend auf der Reset-Bedingung an die Treiberschaltung (30) auszugeben.

7. Steuerungseinheit (20) nach einem der Ansprüche 1 bis 6,
wobei die Treiberschaltung (30) ferner eine Vorbereitungsschaltung (70) mit einem ersten Vorbereitungseingangsknoten (71), der konfiguriert ist, um ein Unterbrechungssignal zu empfangen, und einem dritten Vorbereitungseingangsknoten (73), der konfiguriert ist, um ein Aktivierungssignal vom Mikrocontroller (23) zu empfangen, aufweist,
wobei die Vorbereitungsschaltung (70) konfiguriert ist, um das Unterbrechungssignal nur während des Empfangs des Aktivierungssignals auszugeben.

8. Steuerungseinheit (20) nach Anspruch 7, wobei der Mikrocontroller (23) ferner konfiguriert ist, um eine programmierte Aktivierungsbedingung zu speichern und um das Aktivierungssignal basierend auf der Aktivierungsbedingung an die Treiberschaltung (30) auszugeben.

9. Steuerungsschaltung (20) nach einem der Ansprüche 1 bis 8, wobei die Treiberschaltung (30) aufweist
einen ersten Hardware-Pfad (31), der eine erste Komparatorschaltung (50.1), die konfiguriert ist, um ein erstes Schwellensignal zu empfangen, eine erste Verzögerungsschaltung (60.1), die konfiguriert ist, um ein erstes Verzögerungssignal zu empfangen, und eine erste Vorbereitungsschaltung (70.1), die konfiguriert ist, um zumindest eines eines ersten Reset-Signals und eines ersten Aktivierungssignals zu empfangen, aufweist, und
einen zweiten Hardware-Pfad (32), der eine zweite Komparatorschaltung (50.2), die konfiguriert ist, um ein zweites Schwellensignal zu empfangen, eine zweite Verzögerungsschaltung (60.1), die konfiguriert ist, um ein zweites Verzögerungssignal zu empfangen, und eine zweite Vorbereitungsschaltung (70.1), die konfiguriert ist, um zumindest eines eines zweiten Reset-Signals und eines zweiten Aktivierungssignals zu empfangen, aufweist.

10. Steuerungseinheit (20) nach einem der Ansprüche 1 bis 9, ferner aufweisend eine Pegelverschiebungsschaltung (80), die zwischen die Treiberschaltung (30) und die Schaltschnittstelle (22) geschaltet ist.

11. Steuerungseinheit (20) nach einem der Ansprüche 1 bis 10, wobei die Treiberschaltung (30) konfiguriert ist, um das Unterbrechungssignal in weniger als 10 Mikrosekunden nach Empfang des Sensorsignals auszugeben.

12. Steuerungseinheit (20) nach einem der Ansprüche 1 bis 11, wobei zumindest eine/r der Treiberschaltung (30) und des Mikrocontrollers (23) eine integrierte Schaltung ist.

13. Batteriesystem (10), aufweisend
einen ersten Systemanschluss (11) einer ersten Polarität und einen zweiten Systemanschluss (12) einer zweiten Polarität und eine Vielzahl von Batteriezellen (15), die zwischen dem ersten Systemanschluss (11) und dem zweiten Systemanschluss (12) in Reihe geschaltet sind,
einen Stromsensor (13), der konfiguriert ist, um einen elektrischen Strom zu zumindest einem des ersten Systemanschlusses (11) und des zweiten Systemanschlusses (12) zu messen und um ein Sensorsignal basierend auf dem gemessenen Strom auszugeben;
einen Festkörperschalter (14), der konfiguriert ist, um den elektrischen Strom zum zumindest einen des ersten Systemanschlusses (11) und des zweiten Systemanschlusses (12) in Reaktion auf ein Unterbrechungssignal zu unterbrechen; und
eine Steuerungseinheit (20) nach einem der Ansprüche 1 bis 12.

14. Batteriesystem (10) nach Anspruch 13, wobei jede Batteriezelle (15) einen ersten Zellenanschluss (11) einer ersten Polarität und einen zweiten Zellenanschluss (12) einer zweiten Polarität aufweist; ferner aufweisend
zumindest eine erste Sammelschiene (17), die den ersten Zellenanschluss einer Batteriezelle (15) mit dem zweiten Anschluss einer weiteren Batteriezelle (15) elektrisch verbindet;
zumindest eine zweite Sammelschiene (18), die den zweiten Anschluss einer Batteriezelle (15) mit dem zweiten Systemanschluss (12) elektrisch verbindet,
wobei der Stromsensor (13) einen Shunt-Widerstand (19), der in einer ersten Sammelschiene (17) integriert ist, aufweist; und/oder
wobei der Festkörperschalter (14) in einer zweiten Sammelschiene (18) integriert ist.

## Revendications

1. Unité de commande (20) pour un système de batterie (10), comprenant :
une interface de capteur (21) configurée pour être reliée à un capteur de courant (19) ;
une interface de commutation (22) configurée pour être reliée à un commutateur à semi-conducteur (14) ;
un microcontrôleur programmable (23) configuré pour stocker au moins une condition de désactivation programmée du système de batterie (10) et pour délivrer en sortie au moins un signal de seuil sur la base d'une condition de désactivation respective ; et
un circuit d'attaque (30) étant interconnecté en tant que chemin matériel entre l'interface de capteur (21) pour recevoir un signal de capteur et l'interface de commutation (22) pour délivrer en sortie un signal d'interruption et étant une interface reliée au microcontrôleur (23) pour recevoir l'au moins un signal de seuil,
dans laquelle le circuit d'attaque (30) comprend au moins un circuit comparateur (50) configuré pour comparer le signal de capteur à l'au moins un signal de seuil et pour délivrer en sortie le signal d'interruption dans une condition de fonctionnement non admissible du système de batterie (10),
**caractérisée en ce que** :
le circuit comparateur (50) comprend un premier noeud d'entrée de comparateur (51) configuré pour recevoir le signal de capteur, un deuxième noeud d'entrée de comparateur (52) configuré pour recevoir un signal de seuil défini librement à partir du microcontrôleur (23), et
**en ce que** le circuit comparateur (50) est configuré pour délivrer en sortie le signal d'interruption via un noeud de sortie de comparateur (53) avec une polarité et/ou une amplitude dépendant du rapport du signal de capteur sur le signal de seuil.

2. Unité de commande (20) selon la revendication 1, dans laquelle le circuit d'attaque (30) comprend en outre un circuit d'amplification (40) ayant au moins un noeud d'entrée d'amplification (41, 42) configuré pour recevoir le signal de capteur,
dans laquelle le circuit d'amplification (40) est configuré pour délivrer en sortie le signal de capteur amplifié via un noeud de sortie d'amplification (43).

3. Unité de commande (20) selon l'une quelconque des revendications 1 et 2,
le circuit d'attaque (30) comprenant en outre un circuit de retard (60) ayant un premier noeud d'entrée de retard (61) configuré pour recevoir le signal d'interruption et un deuxième noeud d'entrée de retard (62) configuré pour recevoir un signal de retard à partir du microcontrôleur (23),
où le circuit de retard (60) est configuré pour délivrer en sortie le signal d'interruption retardé via un noeud de sortie de retard (63) avec un retard dépendant du signal de retard .

4. Unité de commande (20) selon la revendication 3, dans laquelle le microcontrôleur (23) est en outre configuré pour stocker une condition de retard programmée et pour délivrer en sortie au circuit d'attaque (30) le signal de retard sur la base de la condition de retard.

5. Unité de commande (20) selon l'une quelconque des revendications 1 à 4,
le circuit d'attaque (30) comprenant en outre un circuit d'amorçage (70) ayant un premier noeud d'entrée d'amorçage (71) configuré pour recevoir le signal d'interruption et un deuxième noeud d'entrée d'amorçage (72) configuré pour recevoir un signal de réinitialisation à partir du microcontrôleur (23),
où le circuit d'amorçage (70) est configuré pour délivrer en sortie le signal d'interruption verrouillé via un noeud de sortie d'amorçage (74) jusqu'à la réception du signal de réinitialisation.

6. Unité de commande (20) selon la revendication 5, dans laquelle le microcontrôleur (23) est en outre configuré pour stocker une condition de réinitialisation programmée et pour délivrer en sortie au circuit d'attaque (30) le signal de réinitialisation sur la base de la condition de réinitialisation.

7. Unité de commande (20) selon l'une quelconque des revendications 1 à 6,
le circuit d'attaque (30) comprenant en outre un circuit d'amorçage (70) ayant un premier noeud d'entrée d'amorçage (71) configuré pour recevoir un signal d'interruption et un troisième noeud d'entrée d'amorçage (73) configuré pour recevoir un signal d'activation à partir du microcontrôleur (23),
où le circuit d'amorçage (70) est configuré pour délivrer en sortie le signal d'interruption uniquement pendant la réception du signal d'activation.

8. Unité de commande (20) selon la revendication 7, dans laquelle le microcontrôleur (23) est en outre configuré pour stocker une condition d'activation programmée et pour délivrer en sortie au circuit d'attaque (30) le signal d'activation sur la base de la condition d'activation.

9. Unité de commande (20) selon l'une quelconque des revendications 1 à 8, le circuit d'attaque (30) comprenant un premier chemin matériel (31) comprenant un premier circuit comparateur (50.1) configuré pour recevoir un premier signal de seuil, un premier circuit de retard (60.1) configuré pour recevoir un premier signal de retard et un premier circuit d'amorçage (70.1) configuré pour recevoir au moins l'un d'un premier signal de réinitialisation et d'un premier signal d'activation, et
un deuxième chemin matériel (32) comprenant un deuxième circuit comparateur (50.2) configuré pour recevoir un deuxième signal de seuil, un deuxième circuit de retard (60.1) configuré pour recevoir un deuxième signal de retard et un deuxième circuit d'amorçage (70.1) configuré pour recevoir au moins l'un d'un deuxième signal de réinitialisation et d'un deuxième signal d'activation.

10. Unité de commande (20) selon l'une quelconque des revendications 1 à 9, comprenant en outre un circuit de décalage de niveau (80) interconnecté entre le circuit d'attaque (30) et l'interface de commutation (22).

11. Unité de commande (20) selon l'une quelconque des revendications 1 à 10, dans laquelle le circuit d'attaque (30) est configuré pour délivrer en sortie le signal d'interruption en moins de 10 microsecondes après la réception du signal de capteur.

12. Unité de commande (20) selon l'une quelconque des revendications 1 à 11, dans laquelle au moins l'un du circuit d'attaque (30) et du microcontrôleur (23) est un circuit intégré.

13. Système de batterie (10), comprenant :
une première borne de système (11) ayant une première polarité et une deuxième borne de système (12) ayant une deuxième polarité et une pluralité d'éléments de batterie (15) reliés en série entre la première borne de système (11) et la deuxième borne de système (12),
un capteur de courant (13) configuré pour mesurer un courant électrique au niveau d'au moins l'une de la première borne de système et de la deuxième borne de système (11) et pour délivrer en sortie un signal de capteur sur la base du courant mesuré ;
un commutateur à semi-conducteur (14) configuré pour interrompre le courant électrique à l'au moins une de la première borne de système (11) et de la deuxième borne de système (12) en réponse à un signal d'interruption ; et
une unité de commande (20) selon l'une quelconque des revendications 1 à 12.

14. Système de batterie (10) selon la revendication 13, dans lequel chaque élément de batterie (15) comprenant une première borne d'élément (11) ayant une première polarité et une deuxième borne d'élément (12) ayant une deuxième polarité ; comprenant en outre :
au moins une première barre omnibus (17) reliant électriquement la première borne d'élément d'un élément de batterie (15) à la deuxième borne d'un autre élément de batterie (15) ;
au moins une deuxième barre omnibus (18) reliant électriquement la deuxième borne d'un élément de batterie (15) à la deuxième borne de système (12),
où le capteur de courant (13) comprend une résistance shunt (19) intégrée dans une première barre omnibus (17), et/ou
où le commutateur à semi-conducteur (14) est intégré dans une deuxième barre omnibus (18).
